# EUROPEAN PATENT SPECIFICATION

(11) **EP 0 717 584 B1**
(45) Date of publication and mention of the grant of the patent: **08.03.2000**
(21) Application number: 95203477.5
(22) Date of filing: 14.12.1995
(51) Int. Cl.: H05B 41/392, G01J 1/04, F21V 23/00

(54) **Lighting device having a light-sensitive control element**
Beleuchtungsanlage mit einem Beleuchtungssensor
Dispositif d'éclairage muni d'un capteur lumineux

(30) Priority: 14.12.1994 NL 9402119; 14.09.1995 NL 1001199
(43) Date of publication of application: 19.06.1996
(73) Proprietor: Etap N.V., 2390 Malle (BE)
(72) Inventor: Adams, Frans J.M., B-2590 Berlaar (BE); Taeymans, Franciscus A.M., B-2340 Beerse (BE)
(74) Representative: Smulders, Theodorus A.H.J., Ir.

(56) References cited:
- US-A- 3 599 048
- US-A- 4 383 288
- US-A- 4 568 826

## Description

The invention relates to a lighting device having a light-sensitive element, comprising a fitting having holder elements for a fluorescent lamp, a choke which is to be connected to a power supply and which can be connected to the holder elements of the lamp, and a light-sensitive element capable of being coupled to the choke, which light-sensitive element is incorporated into the fitting or adapted to be arranged in or adjacent the fitting.

Such a device is known and commercially available. According to a brochure from STP Electronics B.V., issued June 5, 1994, a choke for daylight-dependent control is marketed by that firm. The light sensor to be coupled to the choke can be incorporated into the fitting of the relevant lighting device or can be mounted next to such fitting. In operation, the light sensor is adjusted by means of colored lenses to the light intensity of the space wherein the lighting device is disposed. By the color of the lens it is determined at which amount of entered light the choke starts to reduce the level of artificial lighting produced by the lighting device. For instance, a transparent lens is employed for apparatus disposed in corridors and the like. An orange lens is employed with apparatus in canteens, consulting rooms and the like, and a blue lens is proposed for office spaces. With the known device, automatic adjustment of the amount of light emitted by the device to the amount of entered light (for instance daylight) from the surroundings is possible only to a limited extent. In addition, the light sensors used are not precision components. The colored lenses are incapable of setting off the tolerance existing with such sensors. Hence, the lux values mentioned for each lens in the above-mentioned brochure cannot be taken for granted. On account of this tolerance, variations of many tens of percents are even possible.

The object of the present invention is to provide a device which does not involve the drawbacks of the known device, or at any rate to a drastically reduced extent.

In accordance with the invention, the object set is realized by a device of the type described in the opening paragraph, wherein the light-sensitive element is mounted in a holder which is in principle cylindrical-shaped, adjacent an at least partly open outer end thereof, which cylindrical-shaped holder is concentric with a second cylindrical-shaped holder which surrounds the first holder at least over a part of the length thereof and projects beyond this outer end, whilst the second holder is displaceable in longitudinal direction relative to the first holder, so that the angle of view for the light-sensitive element is altered through displacement of the second holder. Preferably, the second holder is displaceable in such a manner that the angle of view, which is essentially conical, is settable between a value of approximately 30° and approximately 90° for the apex angle of the cone.

With the device according to the invention, the outer end of the holder where the light-sensitive element is disposed can be entirely open or comprise for instance a disc-shaped seal wherein a central opening is provided. By selecting the size of that opening, a basic setting of the light-sensitive element is realized. Through displacement of the holders relative to each other, a fine-adjustment can then take place, as it were.

It is observed that a lighting device as described in the opening paragraph is also disclosed in US Patent 4,568,826. In this known device, the light-sensitive element is mounted in a more or less cylindrical-shaped holder. Provided in the cylinder is a bore from the sidewall to the central channel, which bore has internal screw thread, enabling a screw to be screwed into the bore. By screwing the screw further or less far into the bore, the screw extends further or less far into the central channel, allowing the amount of light admitted to the light-sensitive element to be varied. A drawback of this construction is that the screw is not easy to reach and operate.

It is further observed that US Patent 4,383,288 describes a device for receiving light which can be used for controlling a lighting device. This known gathering device comprises a cylindrical, faceted body of light-transmitting synthetic material. This body can be screwed into a threaded cylinder, whereby the amount of light to be received by the body is influenced. Via an optical fiber, the light received by the body is transmitted to a light-sensitive element. This known, rather intricate construction does not involve any direct influencing of the angle of view of a light-sensitive element.

In a suitable embodiment of the device according to the invention, the first holder is provided with external screw thread and the second holder is provided with internal screw thread, so that displacement of the holders relative to each other can be effected through screw adjustment of the second holder over the first holder. An additional advantage of such a construction is that the screw thread on the inner surface of the second holder prevents the occurrence of undesired reflections against that surface.

In another suitable embodiment of the device according to the invention, the second holder is fitted on the first holder so as to be telescopically slidable.

The light-sensitive element is for instance a light-sensitive resistor (LDR). In accordance with the invention, such an LDR (or a different element) is thus mounted in a hand-settable holder system. The LDR receives light from a part of the space. The area of this observed part can be controlled by displacing the second holder relative to the first one. In a usual manner, the LDR is connected to a common, high-frequent choke suitable for light-control by means of a control voltage of 1-10 V or by means of a controllable resistor. At a proper LDR selection and an adjusted setting of the angle of view of the LDR, the circuitry starts to control the light output (and the power consumption) of the lamp from a given brightness of the surroundings (of which the value is hence settable, via the adjustment of the angle of view through displacement of the holders relative to each other).

Preferably, in the lighting device according to the invention, the attachment of the holders with the light-sensitive element is such that the position of the holders can be varied relative to the lamp to be fitted in the fitting. This enables the user to determine himself which part of the space (windows, walls, floor, desk top or the like) is preferably going to influence the control of the relevant device.

Further, the holders with the light-sensitive element can suitably be mounted on a clamp which can be mounted on one of the holder elements for the lamp or on the lamp itself.

The advantage of the device according to the invention is the slight cost price of the control element. As a result, all lighting devices in a room to be lighted can be of such design. This promotes a great flexibility in the lighting. The adjustability of the control element, owing to the movability of the holders relative to each other, enables the light level to be controlled in a simple manner and at any desired moment, optionally locally, depending on the user's wishes and/or the degree of reflection of the surroundings. It should be observed that essentially, the control does not take place as a function of the lux values in the spaces to be lighted, but as a function of the eventual luminance (objective brightness) of those spaces, which is more correct from an ergonomic and physiologic point of view.

The invention will be explained with reference to the accompanying drawings, wherein:
Fig. 1 is a sectional representation of a portion of an embodiment of the lighting device according to the invention, comprising a holder construction on a clamp;
Fig. 2 is a representation of the adjustable holder construction of the device according to Fig. 1 having an adjusted setting relative to that Figure; and
Fig. 3 is a representation of the clamp construction of the device according to Fig. 1 in a different setting.

In the Figures, similar or corresponding parts are provided with identical reference numerals.

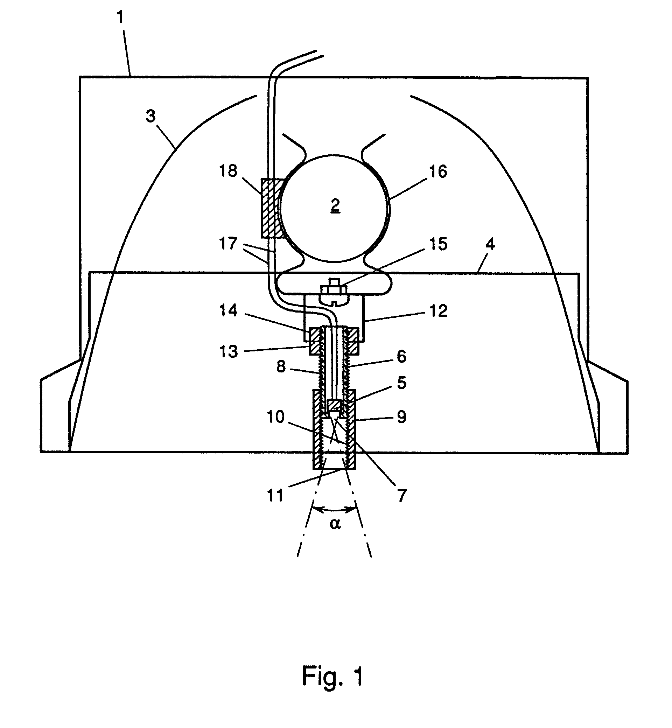

Fig. 1 schematically shows a cross section of an embodiment of the device according to the invention. The fitting comprises a housing 1, wherein a tubular lamp 2 is fitted in longitudinal direction. Further, in longitudinal direction of the housing 1, a. concave-shaped reflector 3 is arranged in the housing, which reflector extends on two sides along and above the lamp 2. Further, a number of spaced transverse mirrors are mounted in the fitting, under the lamp 2. One of those transverse mirrors is schematically shown and designated by 4. The transverse mirror 4 is mounted in suitable recesses of the reflector 3. The construction of the fitting, which in itself does not form a part of the invention, can for instance be as described in European patent EP-B-0.271.150.

The lamp 2 is connected in a conventional manner to a choke, not further shown, which can optionally be accommodated in the fitting. The choke is further coupled to a light-sensitive control element. The light-sensitive control element comprises a light-sensitive element or sensor 5, which element can for instance be a light-sensitive resistor (LDR).

The sensor 5 is fitted in a more or less cylinder shaped holder 6, adjacent an outer end thereof. The outer end at which the sensor 5 is arranged can be completely open or, as shown, can be closed by a more or less disc-shaped seal, wherein a central opening 7 is provided. The holder 6 is at its circumference provided with screw thread 8, allowing a second holder 9, fittingly provided with internal screw thread 10, to be screwed on the holder 6. Thus, the holder 9 surrounds the holder 6 at least partly and projects beyond the above-mentioned outer end with the opening 7. In this manner, the angle of view of the sensor 5 is in the first place defined by the size of the opening 7 and in the second place by the internal lower edge 11 of the second holder 9. In Fig. 1, this angle of view, which is essentially the apex angle of a cone, is designated by α.

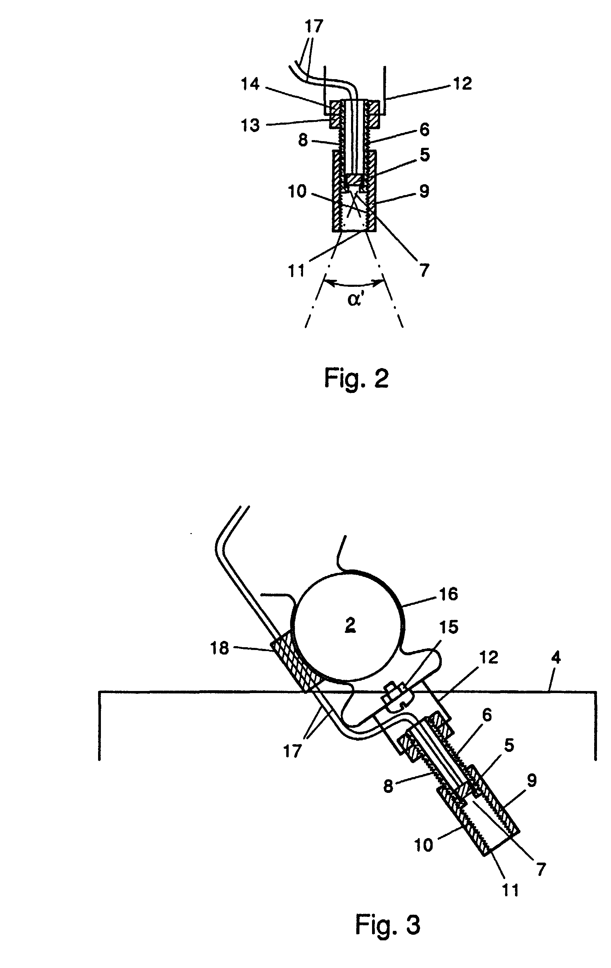

Fig. 2 shows an arrangement of the light-sensitive control element wherein the holder 9 is screwed further over the holder 6. As a consequence, the angle of view for the sensor 5 is enlarged. In Fig. 2, that larger angle of view is designated by α'. Thus, the size of the opening 7 defines the "basic setting" of the sensor 5, while through displacement of the holder 9, a fine-adjustment is realized, as it were.

Instead of a construction with screw thread, as is shown in the Figures, the light-sensitive control element can also be designed with two holders which are telescopically slidable over each other. Still other constructions can easily be conceived by the designer skilled in the art.

In the embodiment shown, the holder 6 of the light-sensitive control element is mounted on a more or less cage-shaped construction 12, for instance manufactured from a folded strip of metal. The holder 6 can be inserted into an opening in the bottom wall of the cage 12 and mounted thereon by means of two nuts 13 and 14 screwed on the external screw thread 8 of the holder 6, respectively under and above the bottom wall of the cage 12. By means of a nut and bolt 15, the cage is mounted on a metal, resilient clamp 16, which clamp 16 engages either the lamp 2, or a holder wherein the lamp 2 is fitted at an outer end thereof.

Owing to the clamp 16, capable of being clamped in any desired position on the lamp 2 or the holder thereof, the light-sensitive control element can be oriented in any desired direction, such as for instance indicated in Fig. 3.

The sensor 5 is connected to the electric wires 17, which are passed, via the cage 12, along the clamp 16 and are fixedly held against the clamp 16 by means of a suitable holding block 18. Beyond the clamp 16, the wires 17 extend to the choke of the device, not shown. Of course, instead of a holding block 18, another retaining mechanism can be used as well, for instance a sleeve made from shrink film, attached to the clamp 16.

With the construction described hereinabove, it is possible to adjust the light level in a simple manner and at any desired moment, depending on the degree of brightness and reflection of the surroundings, while the user can determine himself which part of the surroundings will serve as activator for the control unit.

## Claims

1. A lighting device having a light-sensitive control element, comprising a fitting having holder elements for a fluorescent lamp (2), a choke which is to be connected to a power supply and is connectable to the holder elements of the lamp, and a light-sensitive element (5) capable of being coupled to the choke, said light-sensitive element (5) being incorporated into the fitting or adapted to be arranged in or adjacent the fitting, characterized in that the light-sensitive element (5) is mounted in a first holder (6) which is in principle cylindrical shaped, adjacent an at least partly open outer end thereof, said first cylindrical shaped holder (6) being concentric with a second cylindrical shaped holder (9) which surrounds the first holder (6) at least over a part of the length thereof and projects beyond said outer end, whilst the second holder (9) is displaceable in longitudinal direction relative to the first holder (6), so that the angle of view (α) for the light-sensitive element (5) is altered through displacement of the second holder (9).

2. A lighting device according to claim 1, characterized in that the second holder (9) is displaceable in such a manner that the angle of view (α), essentially conical, is settable between a value of approximately 30° and approximately 90° for the apex angle of the cone.

3. A lighting device according to one of claims 1-2, characterized in that the first holder (6) is provided with external screw thread (8) and the second holder (9) is provided with internal screw thread (10), so that displacement of the holders (6, 9) relative to each other can be effected through screw adjustment of the second holder (9) over the first holder (6).

4. A lighting device according to one of claims 1-2, characterized in that the second holder (9) is fitted on the first holder (6) so as to be telescopically slidable.

5. A lighting device according to any one of claims 1-4, characterized in that the attachment of the holders with the light-sensitive element (5) is such that the position of the holders can be varied relative to the lamp (2) to be fitted in the fitting.

6. A lighting device according to any one of claims 1-5, characterized in that the holders (6, 9) with the light-sensitive element (15) are mounted on a clamp (16) capable of being mounted on one of the holder elements for the lamp (2) or on the lamp (2) itself.

7. A light-sensitive control element consisting of a light-sensitive element (5) for use in a lighting device according to claim 1, the light-sensitive element (5) being accommodated in two mating holders (6, 9) which are in principle cylindrical shaped and which are displaceable relative to each other.

## Patentansprüche

1. Beleuchtungsanlage mit einem lichtempfindlichen Steuerelement, enthaltend eine Halterung mit Halteelementen für eine Leuchtstofflampe (2), eine Drossel, die mit einer Stromversorgung zu verbinden ist und mit den Halteelementen der Lampe verbindbar ist, und ein lichtempfindliches Element (5), das mit der Drossel gekoppelt werden kann, wobei das lichtempfindliche Element (5) in die Halterung integriert ist oder dazu eingerichtet ist, in oder benachbart der Halterung angeordnet zu werden, **dadurch gekennzeichnet**, daß das lichtempfindliche Element (5) in einem ersten Halter (6) befestigt ist, der im wesentlichen zylindrisch ist, benachbart einem wenigstens teilweise offenen äußeren Ende desselben, wobei der erste zylindrische Halter (6) konzentrisch zu einem zweiten zylindrische Halter (9) ist, der den ersten Halter (6) über wenigstens einen Teil von dessen Länge umgibt und über das genannte äußere Ende vorsteht, während der zweite Halter (9) in Längsrichtung gegenüber dem ersten Halter (6) verstellbar ist, so daß der Sichtwinkel (α) des lichtempfindlichen Elements (5) durch Verstellung des zweiten Halters (9) verändert wird.

2. Beleuchtungsanlage nach Anspruch 1, dadurch gekennzeichnet, daß der zweite Halter (9) derart verstellbar ist, daß der im wesentlichen konische Sichtwinkel (α) zwischen einem Wert von etwa 30° und etwa 90° für den Scheitelwinkel des Konus einstellbar ist.

3. Beleuchtungsanlage nach einem der Ansprüche 1 - 2, dadurch gekennzeichnet, daß der erste Halter (6) mit einem Außengewinde (8) und der zweite Halter (9) mit einem Innengewinde (10) versehen ist, so daß eine Verstellung der Halter (6,9) gegeneinander durch Schraubeinstellung des zweiten Halters (9) über den ersten Halter (6) ausgeführt werden kann.

4. Beleuchtungsanlage nach einem der Ansprüche 1-2, dadurch gekennzeichnet, daß der zweite Halter (9) auf den ersten Halter (6) so aufgesetzt ist, daß er teleskopisch verschiebbar ist.

5. Beleuchtungsanlage nach einem der Ansprüche 1-4, dadurch gekennzeichnet, daß die Befestigung der Halter mit dem lichtempfindlichen Element (5) derart ist, daß die Position der Halter relativ zu der in der Halterung anzubringenden Lampe (2) variiert werden kann.

6. Beleuchtungsanlage nach einem der Ansprüche 1-5, dadurch gekennzeichnet, daß die Halter (6,9) mit dem lichtempfindlichen Element (5) an einer Klammer (6) befestigt sind, die an einem der Halteelemente für die Lampe (2) oder an der Lampe (2) selbst montiert werden kann.

7. Lichtempfindliches Steuerelement, bestehend aus einem lichtempfindlichen Element (5) zur Verwendung in einer Beleuchtungsanlage nach Anspruch 1, wobei das lichtempfindliche Element (5) in zwei zueinander passenden Haltern (6,9) untergebracht ist, die im Prinzip zylindrisch sind und die relativ zueinander verstellbar sind.

## Revendications

1. Dispositif d'éclairage comportant un élément de commande photosensible, comprenant un montage comportant des éléments de support pour une lampe fluorescente (2), un gradateur qui doit être relié à une alimentation et peut être relié aux éléments de support de la lampe, et un élément photosensible (5) capable d'être relié au gradateur, ledit élément photosensible (5) étant incorporé dans le montage ou bien conçu pour être agencé dans le montage ou à proximité de celui-ci, caractérisé en ce que l'élément photosensible (5) est monté dans un premier support (6) qui est en principe de forme cylindrique, à proximité d'une extrémité extérieure au moins partiellement ouverte de celui-ci, ledit premier support de forme cylindrique (6) étant concentrique à un second support de forme cylindrique (9) qui entoure le premier support (6) au moins sur une partie de la longueur de celui-ci et dépasse au-delà de ladite extrémité extérieure, tandis que le second support (9) peut être déplacé dans la direction longitudinale relativement au premier support (6), de sorte que l'angle de champ (α) pour le premier élément photosensible (5) est modifié grâce au déplacement du second support (9).

2. Dispositif d'éclairage selon la revendication 1, caractérisé en ce que le second support (9) peut être déplacé de telle manière que l'angle de champ (α), essentiellement conique, peut être réglé entre une valeur d'approximativement 30° et d'approximativement 90° pour l'angle au sommet du cône.

3. Dispositif d'éclairage selon l'une des revendications 1 et 2, caractérisé en ce que le premier support (6) est muni d'un filetage externe (8) et le second support (9) est muni d'un filetage interne (10), de sorte que le déplacement des supports (6, 9) relativement l'un à l'autre peut être réalisé grâce à l'ajustement par vissage du second support (9) sur le premier support (6).

4. Dispositif d'éclairage selon l'une -des revendications 1 et 2, caractérisé en ce que le second support (9) est monté sur le premier support (6) de façon à pouvoir coulisser d'une manière télescopique.

5. Dispositif d'éclairage selon l'une quelconque des revendications 1 à 4, caractérisé en ce que la fixation des supports avec l'élément photosensible (5) est telle que la position des supports peut varier par rapport à la lampe (2) devant être montée dans le montage.

6. Dispositif d'éclairage selon l'une quelconque des revendications 1 à 5, caractérisé en ce que les supports (6, 9) avec l'élément photosensible (15), sont montés sur une fixation (16) pouvant être montée sur l'un des éléments du support pour la lampe (2) ou sur la lampe (2) elle-même.

7. Elément de commande photosensible constitué d'un élément photosensible (5) destiné à être utilisé dans un dispositif d'éclairage selon la revendication 1, l'élément photosensible (5) étant logé dans deux supports appariés (6, 9) qui sont en principe de forme cylindrique et qui peuvent être déplacés relativement l'un à l'autre.
